# EUROPÄISCHE PATENTSCHRIFT

(11) **EP 4 080 159 B1**
(45) Veröffentlichungstag und Bekanntmachung des Hinweises auf die Patenterteilung: **10.09.2025**
(21) Anmeldenummer: 22165581.4
(22) Anmeldetag: 30.03.2022
(51) Int. Cl.: G01B 11/02, E05B 17/00, G06T 7/60

(54) **VERFAHREN ZUM BESTIMMEN VON LÄNGEN EINES PROFILZYLINDERS**
METHOD FOR DETECTING LENGTHS OF A PROFILE CYLINDER
PROCÉDÉ DE DÉTERMINATION DES LONGUEURS D'UN CYLINDRE PROFILÉ

(30) Priorität: 22.04.2021 DE 102021110340
(43) Veröffentlichungstag der Anmeldung: 26.10.2022
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 2 511 650
- DE-A1- 102012 210 586
- US-A1- 2015 169 996

## Beschreibung

Die Erfindung betrifft ein Verfahren zum Bestimmen einer oder mehrerer Längen eines Zylindergehäuses eines Profilzylinders.

Als Schließzylinder für Türen kommen oftmals Profilzylinder zum Einsatz, die nach der Norm DIN 18252:2018-05 normiert sind und dadurch insbesondere hinsichtlich der Maße ihres Querschnitts, aber auch hinsichtlich weiterer Maße festlegt sind. Auf eine bestimmte Länge ist der Profilzylinder dabei jedoch nicht festgelegt, damit je nach Stärke des jeweiligen Türblattes, in das der Profilzylinder eingesetzt werden soll, ein Profilzylinder entsprechender Länge verwendet werden kann. Dabei ist es wichtig, vor einem Einbau die erforderlichen Längen des Profilzylinders richtig zu bestimmen, damit sich der Profilzylinder zum einen durch das gesamte Türblatt (ggf. einschließlich eines Türbeschlags) hindurch und zum anderen möglichst nicht oder jedenfalls nicht wesentlich darüber hinaus erstreckt, um keine Angriffsfläche für einen Aufbruchsversuch zu bieten.

Für den Einbau des Profilzylinders in dem jeweiligen Türblatt kommt es dabei nicht nur auf die korrekte Gesamtlänge des Profilzylinders an, sondern auch darauf, dass der Schließbart des Profilzylinders und die im Zylindergehäuse des Profilzylinders ausgebildete Gewindebohrung zum Einschrauben der Stulpschraube für das Fixieren des Profilzylinders im Türblatt in der richtigen Ebene innerhalb des Türblattes zu liegen kommen, um mit dem Türschloss bzw. der Stulpschraube zusammenwirken zu können. Diese Ebene muss dabei nicht unbedingt exakt in der Mitte des Türblattes liegen, denn die beiden Seiten des Profilzylinders können unterschiedlich lang sein; zudem kann es sich bei dem Profilzylinder um einen Halbzylinder handeln, der typischerweise dort zum Einsatz kommt, wo nur von einer Seite aus geschlossen werden muss, und der daher nur auf einer Seite einen Zylinderkern aufweist, während die andere Seite eine vergleichsweise geringe Länge (bei einem Halbzylinder nach DIN 18252:2018-05 eine definierte Länge von 10 mm) aufweist.

Aus diesem Grund ist es wichtig, dass der Profilzylinder sowohl hinsichtlich seiner Innenlänge, d. h. des Abstands einer mittig durch den Schließbart und die Gewindebohrung verlaufenden Ebene von einer im montierten Zustand nach innen weisenden Stirnseite des Zylindergehäuses des Profilzylinders, als auch hinsichtlich seiner Außenlänge, d. h. des Abstands dieser Ebene von einer im montierten Zustand nach außen weisenden Stirnseite des Zylindergehäuses, zu dem jeweiligen Türblatt passt. Profilzylinder werden daher in der Regel in einer Vielzahl verschiedener Varianten angeboten, die sich hinsichtlich ihrer Innenlängen und ihrer Au-ßenlängen unterscheiden.

Bei einem Einbauen oder Austauschen eines Profilzylinders (sei es ein Doppelzylinder oder ein Halbzylinder) ist es daher wichtig, die relevanten Längen zuverlässig zu bestimmen. Die Längenbestimmung kann jedoch fehleranfällig sein. Insbesondere wenn das Einbauen oder Austauschen von einem Laien durchgeführt wird, kann daher eine zuverlässige Längenbestimmung nicht sicher vorausgesetzt werden.

Ein Verfahren zum Messen des Abstands zwischen zwei Raumpunkten, insbesondere zum Messen der Baulänge eines Profilzylinders, ist beispielsweise aus US 2015/0 169 996 A1 bekannt. Dabei werden aus unterschiedlichen Blickrichtungen zwei Bilder aufgenommen, in denen jeweils neben zumindest einem der beiden Raumpunkte ein Referenzobjekt zu sehen ist, bei dem es sich insbesondere um eine Chipkarte handeln kann.

Ferner ist aus DE 10 2012 210 586 A1 ein Verfahren zur Parametrierung einer automatischen Tür- oder Fensteranlage bekannt. Dabei erfasst eine Bilderfassungseinrichtung ein Referenzmuster, aus dem eine Berechnungseinrichtung dann einen Betriebsparameter der Tür- oder Fensteranlage ermittelt.

Es ist eine Aufgabe der Erfindung, das Bestimmen einer oder mehrerer Längen eines Zylindergehäuses eines Profilzylinders zu vereinfachen und möglichst weitgehend zu automatisieren, um insbesondere Laien bei der Längenbestimmung zu unterstützen.

Die Aufgabe wird gelöst durch ein Verfahren mit den Merkmalen des Anspruchs 1 sowie durch ein Computerprogrammprodukt mit den Merkmalen des Anspruchs 12.

Vorteilhafte Weiterbildungen der Erfindung ergeben sich aus den abhängigen Ansprüchen, der vorliegenden Beschreibung sowie den Figuren.

Das erfindungsgemäße Verfahren zum Bestimmen einer oder mehrerer Längen eines Zylindergehäuses eines Profilzylinders umfasst die folgenden Schritte: Empfangen eines Bildes, das den Profilzylinder in einer Seitenansicht zeigt; Anwenden einer Merkmalserkennung auf das Bild; mittels der Merkmalserkennung Identifizieren zumindest zweier charakteristischer Punkte einer Referenzstruktur des Profilzylinders in dem Bild; anhand der identifizierten charakteristischen Punkte der Referenzstruktur Ermitteln eines oder mehrerer Referenzabstände; mittels der Merkmalserkennung identifizieren zumindest zweier, vorzugsweise zumindest dreier, charakteristischer Punkte einer Längserstreckung des Zylindergehäuses des Profilzylinders in dem Bild, wobei die charakteristischen Punkte an Enden von Längsabschnitten der Längserstreckung liegen, die den zu bestimmenden Längen entsprechen; anhand der identifizierten charakteristischen Punkte der Längserstreckung Ermitteln eines oder mehrerer Messabstände; Berechnen der zu bestimmenden Längen durch Umrechnen der ermittelten Messabstände mittels des Verhältnisses der ermittelten Referenzabstände zu bekannten realen Abständen zwischen den charakteristischen Punkten der Referenzstruktur; und basierend auf den berechneten Längen Ausgeben der zu bestimmenden Längen.

Erfindungsgemäß werden im Rahmen des genannten Identifizierens zumindest zweier charakteristischer Punkte der Referenzstruktur zumindest zwei Punkte an zueinander entgegengesetzten Enden einer Erstreckung eines Schließbarts des Profilzylinders identifiziert. Dabei handelt es sich um zumindest zwei Punkte an zueinander entgegengesetzten Enden einer entlang der Längserstreckung des Zylindergehäuses definierten Breite des Schließbarts. Der Schließbart lässt sich in der Seitenansicht des Profilzylinders gegenüber dem übrigen Profilzylinder, insbesondere gegenüber dem Zylindergehäuse, vergleichsweise leicht automatisiert erkennen, da er typischerweise wesentlich dunkler als das Zylindergehäuse ist. Die charakteristischen Punkte können somit insbesondere auf einem entsprechend ausgerichteten Rand der durch den Schließbart gebildeten dunkleren Fläche im Bild identifiziert werden. Bei einem nach DIN 18252:2018-05 normierten Profilzylinder beträgt die reale Breite des Schließbarts 9,5 mm.

Das Verfahren kann insbesondere einem Bestimmen einer oder mehrerer Längen eines Zylindergehäuses eines nach DIN 18252:2018-05 ausgebildeten Profilzylinders dienen. Grundsätzlich ist das erfindungsgemäße Verfahren aber auch zur Längenbestimmung an anderen Profilzylindern geeignet, die eine Referenzstruktur mit bekannten Abständen zwischen charakteristischen Punkten dieser Referenzstruktur aufweisen.

Die zu bestimmenden Längen sind dabei entlang einer Längsrichtung definiert. Entlang dieser Längsrichtung ist auch die Längserstreckung des Zylindergehäuses definiert, wobei dieser Längserstreckung die Längserstreckung des gesamten Profilzylinders zumindest im Wesentlichen (insbesondere lediglich von einem möglichen axialen Überstand eines Zylinderkerns des Profilzylinders gegenüber dem Zylindergehäuse abgesehen) entspricht. Die Längsrichtung kann insbesondere parallel zu einer Drehachse eines Zylinderkerns und/oder des Schließbarts des Profilzylinders sein. Vorzugsweise weist das Zylindergehäuse bezüglich der Längsrichtung zumindest abschnittsweise einen konstanten Querschnitt und/oder eine konstante Außenkontur auf.

Bei einer der zu bestimmenden Längen kann es sich um die Gesamtlänge des Zylindergehäuses handeln, die insbesondere durch den Abstand zweier (bezüglich der Längsrichtung) entgegengesetzt ausgerichteter Stirnseiten des Zylindergehäuses des Profilzylinders definiert sein kann. Vorzugsweise umfassen die zu bestimmenden Längen eine Innenlänge und/oder eine Außenlänge des Zylindergehäuses, die insbesondere durch den Abstand einer (zur Längsrichtung senkrechten) Mittelebene zu der einen bzw. zu der anderen der beiden genannten Stirnseiten des Zylindergehäuses definiert sind, wobei die Mittelebene vorzugsweise mittig durch den Schließbart des Profilzylinders und/oder durch eine im Zylindergehäuse ausgebildete Gewindebohrung zum Einschrauben einer den Profilzylinder im Türblatt fixierenden Stulpschraube verläuft. Bei deinem Doppelzylinder werden vorzugsweise sowohl die Innenlänge als auch die Außenlänge des Zylindergehäuses bestimmt. Dagegen kann sich die Längenbestimmung bei einem Halbzylinder auf die Länge des Zylindergehäuses auf derjenigen Seite des Halbzylinders beschränken, die den Zylinderkern aufweist.

Das Bild, welches erfindungsgemäß empfangen wird, zeigt den Profilzylinder in einer Seitenansicht. Der Profilzylinder ist dabei idealerweise aus einer zu der genannten Längsrichtung senkrechten Blickrichtung gezeigt. Vorzugsweise ist die Blickrichtung dabei zumindest im Wesentlichen auch senkrecht zu einer Spiegelebene, zu welcher das Zylindergehäuse zumindest im Wesentlichen spiegelsymmetrisch ist. Insbesondere ist die Blickrichtung idealerweise zumindest im Wesentlichen parallel zu der genannten Gewindebohrung für die Stulpschraube ausgerichtet. Für eine zuverlässige Durchführung des Verfahrens braucht das Bild aber nicht exakt aus dieser Blickrichtung aufgenommen zu sein und kann auch zumindest in geringem Maße, beispielsweise durch die Linse der für das Aufnehmen verwendeten Kamera bedingte, optische Verzerrungen aufweisen.

Empfangen werden kann das Bild aus verschiedenen Quellen. Beispielsweise kann ein lokal gespeichertes Bild geladen werden. Das Bild kann aber auch von einer entfernten Stelle, wo es aufgenommen wurde oder jedenfalls gespeichert vorliegt, übertragen werden. Die Übertragung kann beispielsweise durch Hochladen des Bildes auf einen Server, auf dem das Verfahrens durchgeführt wird, insbesondere mithilfe eines Webinterfaces, z.B. einer entsprechenden Webseite, erfolgen. Andere Möglichkeiten sind unter anderem eine Übertragung mittels einer mobilen Applikation, per E-Mail, mittels eines automatisierten Mailsystems oder mithilfe eines Chatbots. Das empfangene Bild muss aber nicht unbedingt bereits vorliegen, sondern kann auch erst im Rahmen des Verfahrens erzeugt werden.

Insbesondere kann das Verfahren gemäß einer vorteilhaften Ausführungsform vor dem Schritt des Empfangens ferner den Schritt umfassen: Aufnehmen eines Bildes mittels einer Kamera, um ein Bild mit einer Seitenansicht des Profilzylinders zu erhalten; wobei im Schritt des Empfangens das aufgenommene Bild empfangen wird. Dieses Aufnehmen wird dabei in der Regel durch einen Nutzer ausgeführt. Ob durch das Aufnehmen des Bildes tatsächlich ein Bild mit einer Seitenansicht des Profilzylinders aufgenommen wird, hängt dabei natürlich von einer korrekten Durchführung des Aufnehmens ab. Insbesondere kann vorgesehen sein, dass das Verfahren einen Prüfschritt enthält, in welchem die Geeignetheit des jeweiligen Bildes geprüft wird, und das Verfahren nur dann weiter durchgeführt wird, wenn diese Prüfung positiv ausgefallen ist; andernfalls kann vorgesehen sein, dass ein weiteres Bild empfangen bzw. aufgenommen wird.

Um möglichst geeignete Bilder zu erzielen, kann außerdem vorgesehen sein, dass der Nutzer im Rahmen des Verfahrens beim Aufnehmen unterstützt wird. Insbesondere kann gemäß einer vorteilhaften Weiterbildung der vorstehenden Ausführungsform das Verfahren vor dem Schritt des Aufnehmens ferner den Schritt umfassen: Anleiten eines Nutzers zum Aufnehmen eines Bildes des Profilzylinders, insbesondere derart, dass das Bild den Profilzylinder in einer Seitenansicht, vor einem hellen Hintergrund, in geeigneter Größe und/oder hinreichend scharf zeigt und/oder eine ausreichende Auflösung aufweist. Das Anleiten kann beispielsweise darin bestehen, dass dem Nutzer Hinweise in Textform gegeben werden, in welcher Weise das aufzunehmende Bild den Profilzylinder zeigen soll. Das Anleiten kann unter Umständen auch interaktiv erfolgen, etwa in dem ein Live-Bild der Kamera analysiert wird und, wenn das Live-Bild geeignet erscheint, ein entsprechender Hinweis angezeigt oder auch direkt das Aufnehmen des Bildes ausgelöst wird.

Unabhängig davon, ob der jeweilige Nutzer zum Aufnehmen eines Bildes des Profilzylinders angeleitet wird, kann gemäß einer weiteren vorteilhaften Ausführungsform vorgesehen sein, dass im Schritt des Aufnehmens mehrere Bilder, sei es als eine Folge zeitlich separater Einzelbilder oder als ein Film aus kontinuierlich aufeinanderfolgenden Bildern, mittels der Kamera aufgenommen werden, und das Verfahren nach dem Schritt des Aufnehmens und vor dem Schritt des Empfangens ferner den Schritt umfasst: Bereitstellen einer Auswahlmöglichkeit zum Auswählen eines der mehreren aufgenommenen Bilder; wobei im Schritt des Empfangens das ausgewählte aufgenommene Bild empfangen wird. Die Auswahlmöglichkeit wird dabei einem Nutzer bereitgestellt, der somit die Möglichkeit erhält, aus den mehreren aufgenommenen Bildern ein für die Längenbestimmung möglichst geeignetes auszuwählen.

Aus welcher Quelle auch immer das Bild des Profilzylinders empfangen wird, wird erfindungsgemäß anschließend die genannte Merkmalserkennung auf das Bild angewandt. Die Merkmalserkennung kann insbesondere computerbasiert erfolgen. Grundsätzlich kann eine solche Merkmalserkennung dabei "von Hand" durch einen Anwender des Verfahrens vorgenommen werden, beispielsweise durch (angeleitetes) Setzen von Markern auf bestimmte Punkte in Bild. Vorzugsweise erfolgt die Merkmalserkennung jedoch automatisiert. Hierfür können an sich bekannte Methoden der Bilderkennung und Mustererkennung eingesetzt werden, die beispielsweise künstliche neuronale Netze und/oder Support Vector Machines umfassen können. Was genau im Rahmen der Anwendung der Merkmalserkennung erkannt wird, wird durch die nachfolgenden Schritte des Identifizierens jeweiliger charakteristischer Punkte konkretisiert, die mittels der Merkmalserkennung durchgeführt werden und daher auch als Unterschritte zu dem Schritt des Anwendens der Merkmalserkennung betrachtet werden können.

Mittels der Merkmalserkennung werden erfindungsgemäß zumindest zwei charakteristische Punkte einer Referenzstruktur des Profilzylinders in dem empfangenen Bild des Profilzylinders identifiziert. Wie oben bereits erwähnt, werden in diesem Rahmen zumindest zwei Punkte an zueinander entgegengesetzten Enden der Breite des Schließbarts des Profilzylinders identifiziert, was aber nicht ausschließt, dass noch weitere Punkte identifiziert werden. Bei den identifizierten Punkten kann es sich auch um Linien oder eine sonstige Menge von Punkten handeln. Grundsätzlich kommen auch Flächen als Objekte des Identifizierens in Frage. Das Identifizieren kann beispielsweise auf einer Kantenerkennung, einer Eckerkennung, einer Erkennung zusammenhängender Flächen anhand ihrer Farbe und/oder Helligkeit im Vergleich zu einer Umgebung, einer Erkennung von Punkten an einem Rand einer solchen Fläche und oder einer Erkennung sonstiger besonderer Charakteristika in dem Bild beruhen. Es kann auch vorgesehen sein, dass zunächst eine größere Anzahl charakteristischer Punkte identifiziert wird, aus der dann zumindest zwei charakteristische Punkte ausgewählt werden. Beispielsweise kann vorgesehen sein, dass zwei Linien identifiziert werden und als die charakteristischen Punkte derjenige Punkt der einen Linie und derjenige Punkt der anderen Linie identifiziert werden, die einander am nächsten sind.

Das genannte Identifizieren erfolgt dabei spezifisch im Hinblick darauf, dass charakteristische Punkte einer bestimmten Referenzstruktur des Profilzylinders identifiziert werden, nämlich zumindest die zwei Punkte an zueinander entgegengesetzten Enden der Breite des Schließbarts des Profilzylinders. Bei der Referenzstruktur, die somit zumindest den Schließbart umfasst, handelt es sich insofern um eine für Profilzylinder typische, vorzugsweise fest vorgegebene Struktur, so dass die zumindest zwei charakteristischen Punkte dieser Struktur in einem definierten räumlichen Verhältnis zueinanderstehen, insbesondere einen bekannten realen Abstand voneinander aufweisen. Vorzugsweise ist die Referenzstruktur durch, insbesondere nach DIN 18252:2018-05, normierte Maße des Profilzylinders definiert. Auf diese Weise kann für die identifizierten charakteristischen Punkte der Referenzstruktur deren realer Abstand voneinander bekannt sein.

Gemäß einer vorteilhaften Ausführungsform werden im Rahmen des Identifizierens zumindest zweier charakteristischer Punkte der Referenzstruktur (zusätzlich zu den genannten zumindest zwei Punkten an zueinander entgegengesetzten Enden der Breite des Schließbarts des Profilzylinders) zumindest zwei Punkte an zueinander entgegengesetzten Enden einer Erstreckung des Profilzylinders identifiziert. Vorzugsweise handelt es sich dabei um zumindest zwei Punkte an zueinander entgegengesetzten Enden einer quer zu der Längserstreckung des Zylindergehäuses definierten Höhe des Zylindergehäuses. Diese Höhe ist dabei aufgrund der Seitenansicht des Profilzylinders im Bild zumindest im Wesentlichen senkrecht zur Blickrichtung ausgerichtet und lässt sich daher vergleichsweise zuverlässig erfassen. Die charakteristischen Punkte können dabei auf der Grenze zwischen einem entsprechenden Rand des Profilzylinders und dem Hintergrund des Bildes liegen. Bei einem nach DIN 18252:2018-05 normierten Profilzylinder beträgt die reale Höhe des Zylindergehäuses 33,3 mm.

Gemäß einer weiteren vorteilhaften Ausführungsform werden im Rahmen des Identifizierens zumindest zweier charakteristischer Punkte der Referenzstruktur (zusätzlich zu den genannten zumindest zwei Punkten an zueinander entgegengesetzten Enden der Breite des Schließbarts des Profilzylinders sowie ggf. zusätzlich zu den zumindest zwei Punkten an zueinander entgegengesetzten Enden einer Erstreckung des Profilzylinders) zumindest zwei Punkte an zueinander entgegengesetzten Enden einer Erstreckung einer Gewindebohrung im Zylindergehäuse des Profilzylinders identifiziert. Die Gewindebohrung kann insbesondere dem Einschrauben einer Stulpschraube zur Fixierung des Profilzylinders im Türblatt dienen und sich quer zur Längserstreckung des Zylindergehäuses und/oder senkrecht zu einer Spiegelebene des Zylindergehäuses erstrecken. Bei den zumindest zwei Punkten handelt es sich vorzugsweise um zumindest zwei Punkte an zueinander entgegengesetzten Enden eines Durchmessers der Gewindebohrung. Ähnlich wie der Schließbart lässt sich auch die Gewindebohrung in der Seitenansicht des Bildes vergleichsweise leicht erkennen. Bei einem nach DIN 18252:2018-05 normierten Profilzylinder weist die Gewindebohrung ein Gewinde des Typs M5 auf, sodass der reale Durchmesser der Gewindebohrung 5 mm beträgt.

Erfindungsgemäß wird/werden anhand der identifizierten charakteristischen Punkte der Referenzstruktur ein oder mehrere Referenzabstände ermittelt. Das können Abstände zwischen zwei einzelnen Punkten oder zwischen zwei Punktmengen (Linien, Flächen), z.B. deren mittlerer oder kleinster Abstand, sein. Da die Referenzabstände anhand der in dem Bild identifizierten charakteristischen Punkte ermittelt werden, handelt es sich bei den Referenzabständen um Abstände in Bildkoordinaten, also in Einheiten des Bildes, beispielsweise in Pixeln.

Wenn eine der beiden vorstehenden Ausführungsformen oder beide miteinander kombiniert vorliegen, kann eines der Maße (Breite des Schließbarts, Höhe des Zylindergehäuses, bzw. Durchmesser der Gewindebohrung) als Hauptmaß herangezogen werden, das bereits eine grundlegende Referenz für die Längenbestimmung bietet und für eine noch zuverlässigere Messung durch eines der zwei anderen Maße (Hilfsmaße) oder durch beide ergänzt wird. Einem anhand der charakteristischen Punkte des Hauptmaßes ermittelten Referenzabstand wird dann beim Berechnen der zu bestimmenden Längen ein größeres Gewicht beigemessen als den anhand der charakteristischen Punkte der Hilfsmaße ermittelten Referenzabständen.

Mittels der Merkmalserkennung werden erfindungsgemäß nicht nur charakteristische Punkte einer Referenzstruktur des Profilzylinders im Bild identifiziert, sondern auch zumindest zwei charakteristische Punkte einer Längserstreckung des Zylindergehäuses, wobei diese charakteristischen Punkte an Enden von Längsabschnitten der Längserstreckung liegen, die den zu bestimmenden Längen entsprechen. Die charakteristischen Punkte der Längserstreckung stellen also insofern Punkte der Längserstreckung da, als sie über die Längserstreckung des Zylindergehäuses verteilt sind und dabei Längenabschnitte begrenzen, die den zu bestimmenden Längen entsprechen. Insbesondere können für jede zu bestimmende Länge jeweils zumindest zwei charakteristische Punkte an Enden eines dieser Länge entsprechenden Längsabschnittes des Zylindergehäuses identifiziert werden, wobei, wenn Enden zweier Längsabschnitte zusammenfallen, ein oder mehrere an einem solchen Ende identifizierte charakteristische Punkte für die Bestimmung beider diesen Längsabschnitten entsprechenden Längen herangezogen werden können.

Gemäß einer vorteilhaften Ausführungsform werden im Rahmen des Identifizierens zumindest zweier charakteristischer Punkte der Längserstreckung zumindest ein Punkt an einer Stirnseite des Zylindergehäuses des Profilzylinders und ein Punkt an einer dazu entgegengesetzten Stirnseite des Zylindergehäuses des Profilzylinders identifiziert. Die Stirnseiten des Zylindergehäuses sind insbesondere senkrecht zu der Längsrichtung ausgerichtet, entlang welcher sich das Zylindergehäuse erstreckt. Anhand der charakteristischen Punkte an diesen Stirnseiten lässt sich insbesondere die Gesamtlänge des Zylindergehäuses ermitteln. Zusammen mit weiteren identifizierten charakteristischen Punkten der Längserstreckung des Zylindergehäuses lassen sich zudem auch weitere Längen ermitteln. Dadurch, dass sich diese charakteristischen Punkte an den Stirnseiten des Zylindergehäuses befinden, bleibt bei der Ermittlung der jeweiligen Länge ein möglicher axialer Überstand des Zylinderkerns über das Zylindergehäuse hinaus vorteilhafterweise unberücksichtigt, da es für den Einbau eines Profilzylinders in einem Türblatt in der Regel nur auf die Maße des Zylindergehäuses des Profilzylinders ankommt.

Vorzugsweise werden zumindest drei charakteristische Punkte der Längserstreckung des Zylindergehäuses identifiziert. Insbesondere wird gemäß einer vorteilhaften Weiterbildung der vorstehenden Ausführungsform im Rahmen des Identifizierens charakteristischer Punkte der Längserstreckung zusätzlich zu den genannten zwei Punkten außerdem ein Punkt in einer quer zur Längserstreckung ausgerichteten und mittig durch den Schließbart des Profilzylinders und/oder mittig durch eine Gewindebohrung im Zylindergehäuse des Profilzylinders verlaufenden Ebene identifiziert. Bei der Gewindebohrung kann es sich insbesondere um die für das Einschrauben der Stulpschraube vorgesehene Gewindebohrung handeln. Durch einen solchen weiteren Punkt können entsprechend weitere Längen ermittelt werden. Insbesondere kann der weitere Punkt zusammen mit dem Punkt an der einen Stirnseite des Zylindergehäuses dem Ermitteln einer Innenlänge sowie zusammen mit dem Punkt an der anderen Stirnseite des Zylindergehäuses dem Ermitteln einer Außenlänge des Zylindergehäuses dienen.

Anhand der identifizierten charakteristischen Punkte der Längserstreckung werden dann erfindungsgemäß ein oder mehrere Messabstände ermittelt. Entsprechend wie bei den Referenzabständen handelt es sich bei den Messeabständen um Abstände in Bildkoordinaten, also in Einheiten des Bildes.

Die auf diese Weise ermittelten Referenzabstände und Messabstände werden dann erfindungsgemäß in dem Schritt des Berechnens der zu bestimmenden Längen herangezogen. Dabei wird das Verhältnis der ermittelten Referenzabstände zu bekannten realen Abständen zwischen den charakteristischen Punkten der Referenzstruktur, die in dem Bild identifiziert worden sind, zum Umrechnen der ermittelten Messabstände in reale Längen genutzt. Insofern entspricht dieses Verhältnis einem Umrechnungsfaktor oder Maßstab zur Umrechnung von in Einheiten des Bildes definierten Maßen in reale Maße. Die bekannten realen Abstände, die dafür herangezogen werden, können für die Profilzylinder, deren Maße bestimmt werden sollen, insbesondere fest vorgegeben sein, vorzugsweise durch eine Norm wie etwa DIN 18252:2018-05.

Aufgrund möglicher Verzerrungen in dem Bild des Profilzylinders kann es sein, dass verschiedene ermittelte Referenzabstände und die jeweiligen ihnen entsprechenden realen Abstände zu unterschiedlichen Verhältnissen führen. Das für die Umrechnung der Messabstände tatsächlich verwendete Verhältnis (Umrechnungsfaktor) kann in einem solchen Fall beispielsweise durch eine Mittelung der verschiedenen Verhältnisse bestimmt werden. Die Mittelung kann dabei eine gewichtete Mittelung sein, bei der vorzugsweise größere Abstände stärker gewichtet werden als kleinere Abstände. Insbesondere kann dabei das Verhältnis zwischen einem der Höhe des Zylindergehäuses entsprechenden Messabstand und der realen Höhe als eine Art Hauptmaß bei der Mittelung stärker gewichtet werden als etwa das Verhältnis zwischen einem der Breite des Schließbarts oder dem Durchmesser einer Gewindebohrung des Zylindergehäuses entsprechenden Messabstand und der realen Breite bzw. dem realen Durchmesser.

Nach dem Berechnen der zu bestimmenden Längen werden schließlich erfindungsgemäß basierend auf den berechneten Längen die zu bestimmenden Längen ausgegeben. Das Ausgeben kann beispielsweise in Form eines Anzeigens eines oder mehrerer Werte, die der einen oder den mehreren zu bestimmenden Längen entsprechen, auf einer Anzeigevorrichtung, beispielsweise einem Bildschirm, erfolgen.

Als Ergebnis der Längenermittlung können dabei unmittelbar die in dem Schritt des Berechnens berechneten Längen ausgegeben werden. Alternativ dazu kann aber auch vorgesehen sein, dass die berechneten Längen zunächst noch, beispielsweise hinsichtlich ihrer Plausibilität, geprüft und/oder modifiziert werden.

Gemäß einer vorteilhaften Ausführungsform umfasst das Verfahren nach dem Schritt des Berechnens und vor dem Schritt des Ausgebens ferner den Schritt: für eine oder mehrere der berechneten Längen, vorzugsweise für alle berechneten Längen, Auswählen derjenigen Länge aus einem vorgegebenen Satz verschiedener zu erwartender Längen, die den geringsten Unterschied zu der jeweiligen berechneten Länge aufweist, und/oder für eine Kombination zumindest zweier berechneter Längen Auswählen derjenigen Kombination aus einem vorgegebenen Satz verschiedener Kombinationen zu erwartender Längen, die den geringsten Unterschied zu der jeweiligen Kombination berechneter Längen aufweist; wobei im Schritt des Ausgebens die ausgewählten Längen und/oder die Längen der ausgewählten Kombination ausgegeben werden. Die ausgewählten Längen und/oder die Längen der ausgewählten Kombination können dabei entweder anstelle der berechneten Längen oder zusätzlich zu diesen ausgebeben werden.

Mit anderen Worten werden bei einer solchen Ausführungsform die eine oder die mehreren berechneten Längen mit zu erwartenden Längen bzw. Längenkombinationen abgeglichen. Als Längen bzw. Längenkombinationen können dabei insbesondere branchenübliche Werte zu erwarten sein. Beispielsweise kann der vorgegebene Satz zu erwartender Längen verschiedene Längen umfassen, die in einem für Profilzylinder üblichen Längenbereich liegen und sich durch ein festes Inkrement von beispielsweise 5 mm voneinander unterscheiden. Entsprechendes kann für den vorgegebenen Satz verschiedener Kombinationen zu erwartender Längen gelten, wobei jede Kombination eine Innenlänge und eine Außenlänge des Zylindergehäuses umfassen kann. Innerhalb des vorgegebenen Satzes können dabei jeweils auch noch Sonderlängen enthalten sein. Insbesondere kann der vorgegebene Satz verschiedener Längen bzw. der vorgegebene Satz verschiedener Längenkombinationen gerade den von einem jeweiligen Anbieter von Profilzylindern produzierten Profilzylindervarianten entsprechen.

Das Auswählen einer Länge bzw. Längenkombination aus dem jeweiligen vorgegebenen Satz erfolgt vorzugsweise automatisch. Grundsätzlich kann jedoch auch vorgesehen sein, dass einem Nutzer zusammen mit der einen oder den mehreren berechneten Längen die zu erwartenden Längen bzw. Längenkombinationen des Satzes oder eine Vorauswahl daraus ausgegeben werden und der Nutzer die Auswahl der Länge bzw. Längenkombination dann selber treffen kann.

Da das Auswählen im Hinblick auf den geringsten Unterschied erfolgt, ergibt sich eine Art Rundung der berechneten Längen auf zu erwartende Längen (tatsächlich produzierter Profilzylinder). Der geringste Unterschied zwischen einer jeweiligen berechneten Länge und einer zu erwartenden Länge muss dabei nicht unbedingt dann vorliegen, wenn die beiden Werte betragsmäßig die geringste Differenz aufweisen, sondern der geringste Unterschied kann auch auf andere Weise definiert sein. Insbesondere kann vorgesehen sein, dass stets nur abgerundet oder nur aufgerundet wird, beispielsweise indem zu erwartende Längen, die größer (beim Abrunden) bzw. kleiner (beim Aufrunden) als die jeweilige berechnete Länge sind, ausgeschlossen werden. Vorzugsweise wird, jedenfalls wenn die betragsmäßige Differenz einen gewissen Toleranzwert überschreitet, nur aufgerundet, um möglichst auszuschließen, dass als Ergebnis eine zu kleine Länge ausgegeben wird und infolgedessen der einzubauende bzw. auszutauschende Profilzylinder für das Türblatt zu kurz ist.

Gemäß einer weiteren vorteilhaften Ausführungsform kann das Verfahren nach dem Schritt des Berechnens der zu bestimmenden Längen ferner den Schritt umfassen: Auswählen desjenigen oder derjenigen Profilzylinder aus einem vorgegebenen Satz von Profilzylindern, dessen/deren Längen den geringsten Unterschied zu den berechneten Längen aufweisen; wobei im Schritt des Ausgebens der zu bestimmenden Längen, entweder zusätzlich zu den berechneten und/oder ausgewählten Längen oder anstelle davon, die ausgewählten Profilzylinder, z.B. eine jeweilige Bezeichnung oder Artikelnummer, ausgegeben werden.

Der vorgegebene Satz von Profilzylindern kann insbesondere durch die Produktpalette eines jeweiligen Anbieters von Profilzylindern definiert sein, wobei der Satz für eine jeweilige ermittelte Länge bzw. Kombination ermittelter Längen mehrere Profilzylinder, beispielsweise aus verschiedenen Produktserien und/oder mit verschiedenen Funktionen und/oder Eigenschaften, enthalten kann. Durch die vorliegende Ausführungsform können einem Nutzer, der die Maße eines Profilzylinders bestimmen will, konkret für einen Austausch des Profilzylinders in Frage kommende Profilzylinder somit automatisch angezeigt und zur Auswahl angeboten werden.

Das erfindungsgemäße Computerprogrammprodukt umfasst ein Programm, das, wenn es von einem Computer ausgeführt wird, den Computer dazu veranlasst, das erfindungsgemäße Verfahren, insbesondere gemäß einer der vorstehend erläuterten Ausführungsformen, durchzuführen.

Vorzugsweise ist das Computerprogrammprodukt zumindest zu einem Teil als mobile Applikation ausgebildet. Grundsätzlich kann das Computerprogrammprodukt vollständig als mobile Applikation ausgebildet sein. Wenn das von dem Computerprogrammprodukt umfasste Programm den Computer dazu veranlasst, ein erfindungsgemäßes Verfahren nach einer Ausführungsform durchzuführen, bei der berechnete Längen oder Kombinationen berechneter Längen mit vorgegebenen Sätzen verglichen werden oder ein oder mehrere Profilzylinder aus einem vorgegebenen Satz von Profilzylindern ausgewählt werden, kann es zweckmäßig sein, wenn der jeweilige vorgegebene Satz hierzu von einem Server geladen wird, insbesondere um stets aktuell zu sein. Es können aber auch mehrere der Verfahrensschritte auf einen Server ausgelagert sein. Beispielsweise kann vorgesehen sein, dass der genannte Schritt des Aufnehmens des Bildes im Rahmen der mobilen Applikation erfolgt, das Bild dann an einen als Serverapplikation ausgebildeten Teil des Computerprogrammprodukts übertragen wird, der das Bild dann empfängt, die weiteren Schritte des Verfahrens bis einschließlich zum Berechnen der zu bestimmenden Längen ausführt und diese Längen, ggf. zusammen mit Bezeichnungen geeigneter Profilzylinder, anschließend zur mobilen Applikation überträgt, von der sie dann angezeigt werden.

Insbesondere mithilfe einer solchen mobilen Applikation kann die Längenbestimmung an einem Profilzylinder für einen Nutzer wesentlich vereinfacht und von dem Nutzer auf komfortable sowie zuverlässige Weise durchgeführt werden.

Die Erfindung wird nachfolgend lediglich beispielhaft anhand der Figuren weiter erläutert.
- Fig. 1: zeigt in einer schematischen Darstellung den Ablauf einer Ausführungsform des erfindungsgemäßen Verfahrens.
- Fig. 2: zeigt ein Bild eines Profilzylinders mit einem Zylindergehäuse, dessen Längen mittels des erfindungsgemäßen Verfahrens zu bestimmen sind.

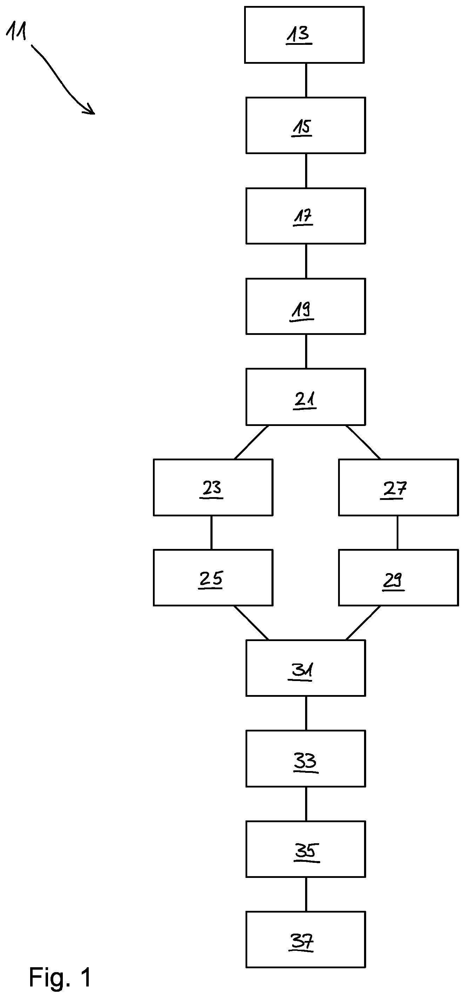

In Fig. 1 ist eine mögliche Ausführungsform des erfindungsgemäßen Verfahrens 11 in schematischer Weise veranschaulicht, wobei die Schritte des Verfahrens 11 als Blöcke dargestellt sind.

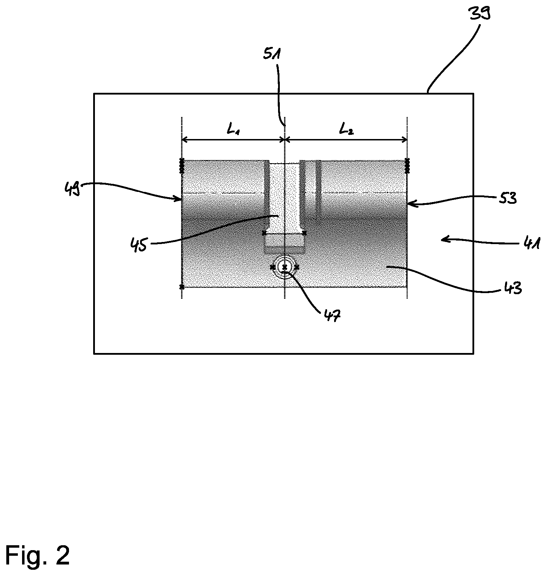

Bei der dargestellten Ausführungsform beginnt das Verfahren 11 mit einem Schritt 13 des Anleitens eines Nutzers zum Aufnehmen eines Bildes 39 eines Profilzylinders 41 (vgl. Fig. 2), der nach DIN 18252:2018-05 ausgebildet ist. Der Nutzer wird dazu angeleitet, das Bild 39 derart aufzunehmen, dass das Bild 39 den Profilzylinder 41 in einer Seitenansicht zeigt, in welcher die Blickrichtung zumindest im Wesentlichen senkrecht zu einer Längserstreckung eines Zylindergehäuses 43 des Profilzylinders 41 sowie senkrecht zu einer Spiegelebene ausgerichtet ist, zu welcher das Zylindergehäuse 43 spiegelsymmetrisch ist.

In einem nachfolgenden Schritt 15 werden mittels einer Kamera ein oder mehrere entsprechende Bilder 39 aufgenommen. Anschließend wird in einem Schritt 17 eine Auswahlmöglichkeit bereitgestellt, die es dem Nutzer ermöglicht, eines der aufgenommenen Bilder 39 auszuwählen. Wenn lediglich ein Bild 39 aufgenommen wurde, kann die Auswahlmöglichkeit auch darin bestehen, dass der Nutzer aufgefordert wird, die Verwendung dieses Bildes 39 für das weitere Verfahren zu bestätigen.

In einem Schritt 19 wird dann ein Bild 39, das den Profilzylinder 41 in einer Seitenansicht zeigt, empfangen, nämlich dasjenige Bild 39, welches in dem Schritt 17 ausgewählt wurde. Grundsätzlich könnte in dem Schritt 19 ein jeweiliges Bild 39 auch unmittelbar, insbesondere ohne einen Schritt 17 des Bereitstellens einer Auswahlmöglichkeit, empfangen werden, beispielsweise direkt von der Kamera oder durch Laden eines gespeicherten Bildes 39 aus einem Speicher.

Anschließend wird in einem Schritt 21 eine Merkmalserkennung auf das Bild 39 angewandt. Anhand dieser Merkmalserkennung werden in dem Bild 39 einerseits im Schritt 23 charakteristische Punkte einer Referenzstruktur des Profilzylinders 41 und andererseits im Schritt 27 charakteristische Punkte einer Längserstreckung des Zylindergehäuses 43 identifiziert. In Fig. 2 sind exemplarisch einige derartige charakteristische Punkte jeweils durch ein "x" in dem Bild 39 des Profilzylinders 41 gekennzeichnet. Mit Bezug auf Fig. 2 wird das Identifizieren der charakteristischen Punkte weiter unten noch näher erläutert.

Anhand der in dem Schritt 23 identifizierten charakteristischen Punkte der Referenzstruktur werden in einem anschließenden Schritt 25 mehrere Referenzabstände zwischen den charakteristischen Punkten ermittelt. In entsprechender Weise werden anhand der in dem Schritt 27 identifizierten charakteristischen Punkte der Längserstreckung in einem anschließenden Schritt 29 mehrere Messabstände ermittelt.

Die ermittelten Referenzabstände und Messabstände werden dann in einem Schritt 31 zum Berechnen der zu bestimmenden Längen L₁, L₂ (vgl. Fig. 2) herangezogen. Dabei werden die ermittelten Messabstände mittels des Verhältnisses der ermittelten Referenzabstände zu bekannten realen Abständen zwischen den charakteristischen Punkten der Referenzstruktur umgerechnet.

Für jede der berechneten Längen wird anschließend in einem Schritt 33 aus einem vorgegebenen Satz verschiedener zu erwartender Längen automatisch diejenige Länge ausgewählt, welche die geringste Differenz von der jeweiligen berechneten Länge aufweist, dabei aber nicht kleiner als die berechnete Länge (ggf. abzüglich eines Toleranzwerts) ist.

Außerdem werden in einem Schritt 35 aus einem vorgegebenen Satz von Profilzylindern, der beispielsweise aus einer Produktdatenbank geladen werden kann, automatisch diejenigen Profilzylinder ausgewählt, deren Zylindergehäuse Längen aufweisen, die in demselben Sinne wie die vorstehend genannten zu erwartenden Längen den geringsten Unterschied zu den berechneten Längen aufweisen.

Schließlich werden in einem Schritt 37 die in dem Schritt 33 ausgewählten Längen sowie die in dem Schritt 35 ausgewählten Profilzylinder an den Nutzer ausgegeben, indem diese Längen sowie die Bezeichnungen der Profilzylinder auf einem Bildschirm angezeigt werden. Dabei kann dem Nutzer zugleich eine Bestellmöglichkeit für einen in Frage kommenden Profilzylinder bereitgestellt werden.

Das Verfahren 11 kann von zumindest einem Computer durchgeführt werden, der dazu von einem Programm, wenn dieses auf dem Computer ausgeführt wird, veranlasst wird. Dabei kann das Computerprogrammprodukt, von dem dieses Programm umfasst wird, zumindest zu einem Teil als mobile Applikation ausgebildet sein. Es müssen also nicht unbedingt alle Schritte des Verfahrens 11 auf demselben Computer durchgeführt werden. Insbesondere können zumindest die Schritte 13, 15 und 17 sowie 37 des Anleitens, Aufnehmens und Bereitstellens einer Auswahlmöglichkeit sowie des Ausgebens der zu bestimmenden Längen L₁, L₂ im Rahmen der mobilen Applikation durchgeführt werden. Grundsätzlich können auch alle Schritte des Verfahrens 11 im Rahmen der mobilen Applikation durchgeführt werden.

In Fig. 2 ist beispielhaft ein Bild 39 gezeigt, dass eine fotografische Aufnahme eines Profilzylinders 41 darstellen soll. Der Profilzylinder 41 ist dabei in einer Seitenansicht aufgenommen, die ihn aus einer zu der Längserstreckung seines Zylindergehäuses 43 senkrechten Blickrichtung zeigt. Im Rahmen der Merkmalserkennung (Schritte 21, 23 und 27; vgl. Fig. 1) werden in diesem Bild 39 charakteristische Punkte (durch "x" gekennzeichnet) der genannten Referenzstruktur des Profilzylinder 41 bzw. der Längserstreckung des Zylindergehäuses 43 identifiziert.

Die Referenzstruktur wird dabei durch die Höhe des Zylindergehäuses 43, durch die Breite eines Schließbarts 45 des Profilzylinders 41 sowie den Durchmesser einer Gewindebohrung 47 in dem Zylindergehäuse 43 definiert. Dementsprechend werden durch die Merkmalserkennung für die Höhe des Zylindergehäuses 43 zumindest ein charakteristischer Punkt an dessen oberem Rand und ein charakteristischer Punkt an dessen unterem Rand, für die Breite des Schließbarts 45 zumindest ein charakteristischer Punkt an dessen linkem Rand und ein charakteristischer Punkt an dessen rechtem Rand sowie für den Durchmesser der Gewindebohrung 47 zumindest ein charakteristischer Punkt an dessen linkem Rand und ein charakteristischer Punkt an dessen rechtem Rand identifiziert (die Richtungsangaben beziehen sich auf die Ausrichtung gemäß Fig. 2). Anhand der Abstände dieser jeweils zumindest zwei charakteristischen Punkte voneinander wird dann für die genannte Höhe, die genannte Breite und den genannten Durchmesser jeweils ein Referenzabstand ermittelt, der den jeweiligen Abstand in Einheiten des Bildes 39 angibt.

Bezüglich der Längserstreckung des Zylindergehäuses 43 werden weitere charakteristische Punkte identifiziert, die an Enden jeweiliger Längsabschnitte dieser Längserstreckung liegen und den zu bestimmenden Längen entsprechen. In dem vorliegenden Beispiel sind die Innenlänge L₁ zwischen einer die Längserstreckung des Zylindergehäuses 43 begrenzenden Stirnseite 49 und einer senkrecht zur Längserstreckung des Zylindergehäuses 43 ausgerichteten und mittig durch die Gewindebohrung 47 verlaufenden Mittelebene 51 des Zylindergehäuses 43 sowie die Außenlänge L₂ zwischen dieser Mittelebene 51 und einer die Längserstreckung des Zylindergehäuses 43 in entgegengesetzte Richtung begrenzenden Stirnseite 53 zu bestimmen.

Dazu werden mehrere charakteristische Punkte an der einen Stirnseite 49 sowie mehrere charakteristische Punkte an der anderen Stirnseite 53 identifiziert. Einzelne oder mehrere dieser Punkte können dabei zugleich identifizierten Punkten der Referenzstruktur entsprechen. Die jeweils mehreren charakteristischen Punkte definieren Linien, die einer jeweiligen der beiden Stirnseiten 49, 53 entsprechen. Außerdem wird ein weiterer charakteristischer Punkt als Mittelpunkt der Gewindebohrung 47 identifiziert, z.B. als Punkt in der Mitte zwischen Punkten auf einem Rand der Gewindebohrung, insbesondere den zwei identifizierten Punkten an den Enden eines Durchmessers der Gewindebohrung 47. Aus den Abständen dieses Mittelpunktes von den den Stirnseiten 49, 53 entsprechenden Linien können dann zwei Messabstände ermittelt werden, von denen einer der Innenlänge L₁ und der andere der Außenlänge L₂ des Zylindergehäuses entspricht, wobei diese Messabstände (wie die Referenzabstände) in Einheiten des Bildes 39 definiert sind.

Die beschriebene Art des Ermittelns der Referenzabstände und der Messabstände stellt lediglich ein Beispiel dar. Es sind viele verschiedene sonstige Weisen denkbar, wie und wo an dem jeweiligen Profilzylinder 41 charakteristische Punkte zu identifizieren sind und auf welche Weise aus Beziehungen, insbesondere Abständen, zwischen diesen charakteristischen Punkten ein jeweiliger Referenzabstand bzw. Messabstand ermittelt werden kann.

Die genannten Referenzabstände beziehen sich auf eine Referenzstruktur, die für den Profilzylinder 41 fest vorgegeben ist, da der Profilzylinder 41 normgemäß ausgebildet ist. Somit sind für die identifizierten charakteristischen Punkte der Referenzstruktur reale Abstände bekannt (insbesondere die tatsächliche Höhe des Zylindergehäuses 43, die tatsächliche Breite des Schließbarts 45 und der tatsächliche Durchmesser der Gewindebohrung 47). Daher lassen sich Verhältnisse eines jeweiligen Referenzabstandes zu dem jeweils entsprechenden realen Abstand ermitteln und als Umrechnungsfaktor heranziehen, um die den zu bestimmenden Längen L₁, L₂ entsprechenden, aber in Bildeinheiten ermittelten Messabstände in die tatsächlichen Längen L₁, L₂ umzurechnen. Anschließend können diese Längen L₁, L₂, ggf. noch gerundet werden, bevor sie schließlich ausgegeben werden.

Das erfindungsgemäße Verfahren 11 bietet einem Nutzer somit eine einfache und komfortable Möglichkeit, einen Profilzylinder zuverlässig zu vermessen.

### Bezugszeichen

- 11: Verfahren
- 13: Schritt des Anleitens
- 15: Schritt des Aufnehmens
- 17: Schritt des Bereitstellens
- 19: Schritt des Empfangens
- 21: Schritt des Anwendens
- 23: Schritt des Identifizierens
- 25: Schritt des Ermittelns
- 27: Schritt des Identifizierens
- 29: Schritt des Ermittelns
- 31: Schritt des Berechnens
- 33: Schritt des Auswählens
- 35: Schritt des Auswählens
- 37: Schritt des Ausgebens
- 39: Bild
- 41: Profilzylinder
- 43: Zylindergehäuse
- 45: Schließbart
- 47: Gewindebohrung
- 49: Stirnseite
- 51: Mittelebene
- 53: Stirnseite

## Patentansprüche

1. Computerimplementiertes Verfahren (11) zum Bestimmen einer oder mehrerer Längen (L₁, L₂) eines Zylindergehäuses (43) eines Profilzylinders (41) mit den Schritten:
- Empfangen (19) eines Bildes (39), das den Profilzylinder (41) in einer Seitenansicht zeigt;
- Anwenden (21) einer Merkmalserkennung auf das Bild (39);
- mittels der Merkmalserkennung Identifizieren (23) zumindest zweier charakteristischer Punkte einer Referenzstruktur des Profilzylinders (41) in dem Bild (39);
- anhand der identifizierten charakteristischen Punkte der Referenzstruktur Ermitteln (25) eines oder mehrerer Referenzabstände;
- mittels der Merkmalserkennung Identifizieren (27) zumindest zweier, vorzugsweise zumindest dreier, charakteristischer Punkte einer Längserstreckung des Zylindergehäuses (43) des Profilzylinders (41) in dem Bild (39), wobei die charakteristischen Punkte an Enden von Längsabschnitten der Längserstreckung liegen, die den zu bestimmenden Längen (L₁, L₂) entsprechen;
- anhand der identifizierten charakteristischen Punkte der Längserstreckung Ermitteln (29) eines oder mehrerer Messabstände;
- Berechnen (31) der zu bestimmenden Längen (L₁, L₂) durch Umrechnen der ermittelten Messabstände mittels des Verhältnisses der ermittelten Referenzabstände zu bekannten realen Abständen zwischen den charakteristischen Punkten der Referenzstruktur; und
- basierend auf den berechneten Längen Ausgeben (37) der zu bestimmenden Längen (L₁, L₂),
wobei im Rahmen des Identifizierens (23) zumindest zweier charakteristischer Punkte der Referenzstruktur zumindest zwei Punkte an zueinander entgegengesetzten Enden einer Erstreckung eines Schließbarts (45) des Profilzylinders (41), nämlich an zueinander entgegengesetzten Enden einer entlang der Längserstreckung des Zylindergehäuses (43) definierten Breite des Schließbarts (45), identifiziert werden.

2. Verfahren nach Anspruch 1,
wobei das Verfahren (11) vor dem Schritt des Empfangens (19) ferner den Schritt umfasst:
- Aufnehmen (15) eines Bildes (39) mittels einer Kamera, um ein Bild (39) mit einer Seitenansicht des Profilzylinders (41) zu erhalten;
und wobei im Schritt des Empfangens (19) das aufgenommene Bild (39) empfangen wird.

3. Verfahren nach Anspruch 2,
wobei das Verfahren (11) vor dem Schritt des Aufnehmens (15) ferner den Schritt umfasst:
- Anleiten (13) eines Nutzers zum Aufnehmen eines Bildes (39) des Profilzylinders (41).

4. Verfahren nach Anspruch 2 oder 3,
wobei im Schritt des Aufnehmens (15) mehrere Bilder (39) mittels der Kamera aufgenommen werden, und das Verfahren (11) nach dem Schritt des Aufnehmens (15) und vor dem Schritt des Empfangens (19) ferner den Schritt umfasst:
- Bereitstellen (17) einer Auswahlmöglichkeit zum Auswählen eines der mehreren aufgenommenen Bilder (39);
und wobei im Schritt des Empfangens (19) das ausgewählte aufgenommene Bild (39) empfangen wird.

5. Verfahren nach zumindest einem der vorstehenden Ansprüche,
wobei die Referenzstruktur durch, insbesondere nach DIN 18252:2018-05, normierte Maße des Profilzylinders (41) definiert ist.

6. Verfahren nach zumindest einem der vorstehenden Ansprüche,
wobei im Rahmen des Identifizierens (23) zumindest zweier charakteristischer Punkte der Referenzstruktur zumindest zwei Punkte an zueinander entgegengesetzten Enden einer Erstreckung des Profilzylinders (41), insbesondere an zueinander entgegengesetzten Enden einer quer zur Längserstreckung des Zylindergehäuses (43) definierten Höhe des Zylindergehäuses (43), identifiziert werden.

7. Verfahren nach zumindest einem der vorstehenden Ansprüche,
wobei im Rahmen des Identifizierens (23) zumindest zweier charakteristischer Punkte der Referenzstruktur zumindest zwei Punkte an zueinander entgegengesetzten Enden einer Erstreckung einer Gewindebohrung (47) im Zylindergehäuse (43) des Profilzylinders (41), insbesondere an zueinander entgegengesetzten Enden eines Durchmessers der Gewindebohrung (47), identifiziert werden.

8. Verfahren nach zumindest einem der vorstehenden Ansprüche,
wobei im Rahmen des Identifizierens (27) zumindest zweier charakteristischer Punkte der Längserstreckung zumindest ein Punkt an einer Stirnseite (49) des Zylindergehäuses (43) des Profilzylinders (41) und ein Punkt an einer dazu entgegengesetzten Stirnseite (53) des Zylindergehäuses (43) des Profilzylinders (41) identifiziert werden.

9. Verfahren nach Anspruch 8,
wobei im Rahmen des Identifizierens (27) zumindest zweier charakteristischer Punkte der Längserstreckung außerdem ein Punkt in einer quer zur Längserstreckung ausgerichteten und mittig durch den Schließbart (45) des Profilzylinders (41) und/oder mittig durch eine Gewindebohrung (47) im Zylindergehäuse (43) des Profilzylinders (41) verlaufenden Ebene (51) identifiziert wird.

10. Verfahren nach zumindest einem der vorstehenden Ansprüche,
wobei das Verfahren (11) nach dem Schritt des Berechnens (31) und vor dem Schritt des Ausgebens (37) ferner den Schritt umfasst:
- für eine oder mehrere der berechneten Längen Auswählen (33) derjenigen Länge aus einem vorgegebenen Satz verschiedener zu erwartender Längen, die den geringsten Unterschied zu der jeweiligen berechneten Länge aufweist, und/oder für eine Kombination zumindest zweier berechneter Längen Auswählen derjenigen Kombination aus einem vorgegebenen Satz verschiedener Kombinationen zu erwartender Längen, die den geringsten Unterschied zu der jeweiligen Kombination berechneter Längen aufweist;
und wobei im Schritt des Ausgebens (37) die ausgewählten Längen und/ oder die Längen der ausgewählten Kombination ausgegeben werden.

11. Verfahren nach zumindest einem der vorstehenden Ansprüche,
wobei das Verfahren (11) nach dem Schritt des Berechnens (31) ferner den Schritt umfasst:
- Auswählen (35) desjenigen oder derjenigen Profilzylinder aus einem vorgegebenen Satz von Profilzylindern, dessen/deren Längen den geringsten Unterschied zu den berechneten Längen aufweisen;
und wobei im Schritt des Ausgebens (37) der zu bestimmenden Längen (L₁, L₂) die ausgewählten Profilzylinder ausgegeben werden.

12. Computerprogrammprodukt, umfassend ein Programm, das, wenn es von einem Computer ausgeführt wird, den Computer dazu veranlasst, ein Verfahren (11) nach einem der vorstehenden Ansprüche durchzuführen.

13. Computerprogrammprodukt gemäß Anspruch 12 wobei das Computerprogrammprodukt zumindest zu einem Teil als mobile Applikation ausgebildet ist.

## Claims

1. A computer-implemented method (11) for determining one or more lengths (L₁, L₂) of a cylinder housing (43) of a profile cylinder (41) comprising the steps of:
- receiving (19) an image (39) showing the profile cylinder (41) in a side view;
- applying (21) a feature recognition to the image (39);
- identifying (23) at least two characteristic points of a reference structure of the profile cylinder (41) in the image (39) by the feature recognition;
- determining (25) one or more reference distances on the basis of the identified characteristic points of the reference structure;
- identifying (27) at least two, preferably at least three, characteristic points of a longitudinal extent of the cylinder housing (43) of the profile cylinder (41) in the image (39) by the feature recognition, wherein the characteristic points are located at ends of length sections of the longitudinal extent which correspond to the lengths (L₁, L₂) to be determined;
- determining (29) one or more measurement distances on the basis of the identified characteristic points of the longitudinal extent;
- calculating (31) the lengths (L₁, L₂) to be determined by converting the determined measurement distances using the ratio of the determined reference distances to known real distances between the characteristic points of the reference structure; and
- outputting (37) the lengths (L₁, L₂) to be determined based on the calculated lengths,
wherein, in the identifying (23) of at least two characteristic points of the reference structure, at least two points at mutually opposite ends of an extent of a locking cam (45) of the profile cylinder (41) are identified, namely at mutually opposite ends of a width of the locking cam (45) defined along the longitudinal extent of the cylinder housing (43).

2. A method according to claim 1,
wherein the method (11), prior to the step of receiving (19), further comprises the step of:
- recording (15) an image (39) by a camera to obtain an image (39) having a side view of the profile cylinder (41);
and wherein in the step of receiving (19), the recorded image (39) is received.

3. A method according to claim 2,
wherein the method (11), prior to the step of recording (15), further comprises the step of:
- instructing (13) a user to record an image (39) of the profile cylinder (41).

4. A method according to claim 2 or 3,
wherein in the step of recording (15), a plurality of images (39) are recorded by the camera, and the method (11), after the step of recording (15) and prior to the step of receiving (19), further comprises the step of:
- providing (17) a selecting option for selecting one of the plurality of recorded images (39);
and wherein in the step of receiving (19), the selected recorded image (39) is received.

5. A method according to at least one of the preceding claims,
wherein the reference structure is defined by standardized dimensions of the profile cylinder (41), in particular according to **DIN** 18252:2018-05.

6. A method according to at least one of the preceding claims,
wherein, in the identifying (23) of at least two characteristic points of the reference structure, at least two points at mutually opposite ends of an extent of a locking cam (45) of the profile cylinder (41) are identified, in particular at mutually opposite ends of a height of the cylinder housing (43) defined transverse to the longitudinal extent of the cylinder housing (43).

7. A method according to at least one of the preceding claims,
wherein, in the identifying (23) of at least two characteristic points of the reference structure, at least two points at mutually opposite ends of an extent of a threaded bore (47) in the cylinder housing (43) of the profile cylinder (41), in particular at mutually opposite ends of a diameter of the threaded bore (47), are identified.

8. A method according to at least one of the preceding claims,
wherein, in the identifying (27) of at least two characteristic points of the longitudinal extent, at least one point at an end face (49) of the cylinder housing (43) of the profile cylinder (41) and one point at an end face (53) of the cylinder housing (43) of the profile cylinder (41) opposite thereto are identified.

9. A method according to claim 8,
wherein, in the identifying (27) of at least two characteristic points of the longitudinal extent, also a point in a plane (51) aligned transverse to the longitudinal extent and running centrally through the locking cam (45) of the profile cylinder (41) and/or centrally through a threaded bore (47) in the cylinder housing (43) of the profile cylinder (41) is identified.

10. A method according to at least one of the preceding claims,
wherein the method (11), after the step of calculating (31) and prior to the step of outputting (37), further comprises the step of:
- for one or more of the calculated lengths, selecting (33) from a predetermined set of different expected lengths, that length which has the least difference from the respective calculated length, and/or for a combination of at least two calculated lengths, selecting from a predetermined set of different combinations of expected lengths, that combination which has the least difference from the respective combination of calculated lengths;
and wherein in the step of outputting (37), the selected lengths and/or the lengths of the selected combination are output.

11. A method according to at least one of the preceding claims,
wherein the method (11), after the step of calculating (31), further comprises the step of:
- selecting (35) from a predetermined set of profile cylinders, the profile cylinder or cylinders whose length(s) has/have the least difference from the calculated lengths;
and wherein in the step of outputting (37) the lengths (L₁, L₂) to be determined, the selected profile cylinders are output.

12. A computer program product comprising a program, that when executed by a computer, allows the computer to carry out a method (11) according to any one of the preceding claims.

13. A computer program product according to claim 12, wherein the computer program product is configured, at least in part, as a mobile application.

## Revendications

1. Procédé (11) mis en œuvre par ordinateur pour définir une ou plusieurs longueurs (L₁, L₂) d'un corps de cylindre (43) d'un cylindre profilé (41), comprenant les étapes consistant à :
- recevoir (19) une image (39) représentant le cylindre profilé (41) en vue de côté ;
- appliquer (21) une détection de caractéristiques à l'image (39) ;
- identifier (23), grâce à la détection de caractéristiques, au moins deux points caractéristiques d'une structure de référence du cylindre profilé (41) dans l'image (39) ;
- déterminer (25) une ou plusieurs distances de référence à l'aide des points caractéristiques identifiés de la structure de référence ;
- identifier (27), grâce à la détection de caractéristiques, au moins deux, de préférence au moins trois, points caractéristiques d'une extension longitudinale du corps de cylindre (43) du cylindre profilé (41) dans l'image (39), les points caractéristiques étant situés aux extrémités de portions longitudinales de l'extension longitudinale qui correspondent aux longueurs (L₁, L₂) à définir ;
- déterminer (29) une ou plusieurs distances mesurées à l'aide des points caractéristiques identifiés de l'extension longitudinale ;
- calculer (31) les longueurs (L₁, L₂) à définir en convertissant les distances mesurées déterminées, à l'aide du rapport des distances de référence déterminées sur les distances réelles connues entre les points caractéristiques de la structure de référence ; et
- émettre (37) les longueurs (L₁, L₂) à définir en se basant sur les longueurs calculées,
dans lequel, lors de l'identification (23) d'au moins deux points caractéristiques de la structure de référence, au moins deux points situés aux extrémités opposées l'une à l'autre d'une extension d'un panneton (45) du cylindre profilé (41), à savoir aux extrémités opposées l'une à l'autre d'une largeur du panneton (45) définie le long de l'extension longitudinale du corps de cylindre (43), sont identifiés.

2. Procédé selon la revendication 1,
dans lequel, avant l'étape de réception (19), le procédé (11) comprend en outre l'étape consistant à :
- prendre (15) une image (39) à l'aide d'une caméra pour obtenir une image (30) avec une vue de côté du cylindre profilé (41) ;
l'image prise (39) étant reçue à l'étape de réception (19).

3. Procédé selon la revendication 2,
dans lequel, avant l'étape de prise de vue (15), le procédé (11) comprend en outre l'étape consistant à :
- instruire (13) un utilisateur pour prendre une image (39) du cylindre profilé (41).

4. Procédé selon la revendication 2 ou 3,
dans lequel, à l'étape de prise de vue (15), plusieurs images (39) sont prises au moyen de la caméra, et, après l'étape de prise de vue (15) et avant l'étape de réception (19), le procédé (11) comprend en outre l'étape consistant à :
- fournir (17) une option de sélection permettant de sélectionner l'une des images prises (39) ;
et, à l'étape de réception (19), l'image prise sélectionnée (39) est reçue.

5. Procédé selon l'une au moins des revendications précédentes,
dans lequel la structure de référence est définie par les dimensions normalisées, en particulier selon la norme DIN 18252:2018-05, du cylindre profilé (41).

6. Procédé selon l'une au moins des revendications précédentes,
dans lequel, lors de l'identification (23) d'au moins deux points caractéristiques de la structure de référence, au moins deux points situés aux extrémités opposées l'une à l'autre d'une extension du cylindre profilé (41), en particulier aux extrémités opposées l'une à l'autre d'une hauteur du corps de cylindre (43) définie transversalement à l'extension longitudinale du corps de cylindre (43), sont identifiés.

7. Procédé selon l'une au moins des revendications précédentes,
dans lequel, lors de l'identification (23) d'au moins deux points caractéristiques de la structure de référence, au moins deux points situés aux extrémités opposées l'une à l'autre d'une extension d'un alésage taraudé (47) dans le corps de cylindre (43) du cylindre profilé (41), en particulier aux extrémités opposées l'une à l'autre d'un diamètre de l'alésage taraudé (47), sont identifiés.

8. Procédé selon l'une au moins des revendications précédentes,
dans lequel, lors de l'identification (27) d'au moins deux points caractéristiques de l'extension longitudinale, au moins un point situé sur une face frontale (49) du corps de cylindre (43) du cylindre profilé (41) et un point situé sur une face frontale opposée (53) du corps de cylindre (43) du cylindre profilé (41) sont identifiés.

9. Procédé selon la revendication 8,
dans lequel, lors de l'identification (27) d'au moins deux points caractéristiques de l'extension longitudinale, un point situé dans un plan (51) orienté transversalement à l'extension longitudinale et passant au milieu par le panneton (45) du cylindre profilé (41) et/ou passant au milieu par un alésage taraudé (47) du corps de cylindre (43) du cylindre profilé (41) est également identifié.

10. Procédé selon l'une au moins des revendications précédentes,
dans lequel, après l'étape de calcul (31) et avant l'étape d'émission (37), le procédé (11) comprend en outre l'étape consistant à :
- pour une ou plusieurs longueurs calculées, sélectionner (33), parmi un ensemble prédéterminé de différentes longueurs à attendre, la longueur qui présente la plus petite différence par rapport à la longueur calculée respective, et/ou pour une combinaison d'au moins deux longueurs calculées, sélectionner, parmi un ensemble prédéterminé de différentes combinaisons de longueurs à attendre, la combinaison qui présente la plus petite différence par rapport à la combinaison respective de longueurs calculées ;
et, à l'étape d'émission (37), les longueurs sélectionnées et/ou les longueurs de la combinaison sélectionnée sont émises.

11. Procédé selon l'une au moins des revendications précédentes,
dans lequel, après l'étape de calcul (31), le procédé (11) comprend en outre l'étape consistant à :
- sélectionner (35), parmi un ensemble prédéterminé de cylindres profilés, le ou les cylindres profilés dont les longueurs présentent la plus petite différence par rapport aux longueurs calculées ;
et, à l'étape d'émission (37) des longueurs (L₁, L₂) à définir, les cylindres profilés sélectionnés sont émis.

12. Produit de programme informatique comprenant un programme qui, lorsqu'il est exécuté par un ordinateur, amène l'ordinateur à mettre en œuvre un procédé (11) selon l'une des revendications précédentes.

13. Produit de programme informatique selon la revendication 12,
dans lequel le produit de programme informatique est réalisé au moins en partie sous la forme d'une application mobile.
